# NOUVEAU FASCICULE DE BREVET EUROPEEN

(11) **EP 3 215 653 B2**
(45) Date de publication et mention de la décision concernant l'opposition: **10.08.2022**
(45) Mention de la délivrance du brevet: 03.04.2019
(21) Numéro de dépôt: 15788171.5
(22) Date de dépôt: 13.10.2015
(51) Int. Cl.: C23C 18/18, C23C 18/20

(54) **PROCEDES DE METALLISATION DE PIECES PLASTIQUES**
VERFAHREN ZUR METALLISIERUNG VON KUNSTSTOFFTEILEN
PROCESSES FOR METALLIZING PLASTIC PARTS

(30) Priorité: 04.11.2014 FR 1460644
(43) Date de publication de la demande: 13.09.2017
(73) Titulaire: Atotech Deutschland GmbH & Co. KG, 10553 Berlin (DE)
(72) Inventeur: BROUZES, Alexandre, F-78320 Le Mesnil Saint Denis (FR)
(74) Mandataire: Atotech Deutschland GmbH & Co. KG
(86) Numéro de dépôt international: PCT/FR2015/052753
(87) Numéro de publication internationale: WO 2016/071598

(56) Documents cités:
- EP-A1- 3 009 528
- WO-A1-2015/126544
- JP-A- S6 077 994
- JP-A- S62 247 077
- US-A- 3 619 243
- US-A- 3 775 121
- US-A- 4 748 104
- US-A1- 2009 239 079

## Description

### Domaine technique

La présente invention concerne une méthode pour empêcher la métallisation d'un support d'au moins une pièce plastique soumise à un procédé de métallisation, comprenant les étapes successives d'oxydation de la surface de ladite pièce, d'activation de la surface oxydée et de dépôt chimique et/ou électrochimique de métal sur la surface activée, caractérisé en ce qu'il comprend une étape de mise en contact dudit support, avant ladite étape d'oxydation, avec une solution inhibitrice comprenant au moins un inhibiteur de métallisation spécifique. L'invention concerne également un procédé de métallisation sélective d'une pièce plastique associée à un support, comprenant la mise en contact de ladite pièce avec ladite solution inhibitrice.

### Etat de l'art

Il est connu de métalliser des matériaux plastiques pour leur conférer des propriétés esthétiques, électriques ou mécaniques particulières, en vue d'une utilisation de ces pièces dans l'industrie cosmétique, textile, automobile, aéronautique, électronique ou de l'électroménager, par exemple. Le matériau à métalliser étant constitué d'un polymère non conducteur, les procédés de métallisation industriels comprennent un enchaînement d'étapes destinées à modifier sa surface afin de permettre le dépôt d'un revêtement métallique pouvant être de nature variée. Ces étapes ont pour but d'assurer une adhérence optimale entre le substrat plastique et le métal, afin de compenser l'accumulation de tensions à l'interface plastique /métal, due notamment aux différences de coefficients de dilatation, et de prévenir ainsi d'éventuelles délaminations.

Le procédé traditionnel de métallisation comprend ainsi le trempage du substrat successivement dans différents bains, destinés à réaliser une ou plusieurs réactions chimiques à la surface de l'échantillon. Un exemple d'enchaînement classique comprend les étapes suivantes :
- Préparation et nettoyage de l'échantillon, afin d'améliorer sa mouillabilité dans l'étape suivante,
- Attaque oxydante de l'échantillon (satinage) permettant de créer en surface une micro-rugosité favorisant l'ancrage ultérieur du métal, typiquement à l'aide d'un bain d'acide sulfurique à 40-70°C contenant du chrome VI,
- Neutralisation du chrome VI en excès (qui constitue un poison du catalyseur utilisé ultérieurement), par exemple par réduction en chrome III à l'aide d'un agent réducteur tel que l'hydrazine,
- Activation de la surface par dépôt d'un catalyseur, généralement un colloïde palladium/étain formé de particules présentant un coeur Pd/Sn entouré d'une enveloppe d'ions Sn²⁺ neutralisés par des ions Cl⁻ : ces particules diffusent dans les microporosités présentes à la surface du plastique et s'y adsorbent chimiquement, permettant de catalyser la réaction ultérieure de dépôt chimique,
- Accélération par immersion de l'échantillon dans un bain, notamment d'acide sulfurique, permettant d'oxyder les ions Sn II en ions Sn IV et de libérer les particules de palladium adsorbées,
- Dépôt chimique d'une couche métallique, par immersion de l'échantillon dans une solution aqueuse de sel métallique (cuivre ou nickel par exemple) renfermant un agent réducteur, tel que l'hypophosphite de sodium, permettant la réduction d'ions métalliques sur les germes Pd/Sn adsorbés puis sur toute la surface de l'échantillon,
- Epaississement de la couche métallique ainsi obtenue, par voie électrolytique.

Les étapes ci-dessus peuvent en outre chacune être suivies d'une ou plusieurs étapes intermédiaires de rinçage à l'eau ou à l'aide de solutions aqueuses. On notera par ailleurs que certains procédés de métallisation dits par placage direct (ou "direct plating") ne comprennent pas d'étape de dépôt chimique.

Afin de réaliser successivement ces différents traitements, les pièces sont placées sur des supports (ou cadres) qui sont déplacés de bain en bain, éventuellement en passant par des étapes intermédiaires de rinçage. Typiquement, ces supports sont constitués d'une âme métallique recouverte de plastique, par exemple du PVC.

L'un des problèmes rencontrés lors de la métallisation de pièces plastiques sur un support vient de l'exposition simultanée des pièces plastiques et des supports à chacune des étapes, ce qui peut conduire à la métallisation du support. Industriellement, il est cependant capital que les supports de pièces ne métallisent pas. En effet, si le support est métallisé, il faudra prévoir une étape ultérieure de dé-métallisation, ce qui induit des coûts non désirés, ainsi qu'une consommation excessive de produits chimiques. De plus, la présence de métal sur les supports entraîne l'apparition de défauts de métallisation liés aux supports devenus conducteurs. Cette étape supplémentaire affecte également négativement la productivité du procédé de métallisation. En outre, elle est généralement réalisée à l'aide d'acide chlorhydrique, d'acide nitrique ou d'un décapage électrolytique en milieu basique. On comprend que certains de ces traitements peuvent être toxiques pour l'environnement. Enfin, lorsque le support est métallisé en même temps que les pièces, il n'est pas possible d'évaluer correctement la quantité de réactif à appliquer, car le taux de recouvrement du support n'est pas connu, ce qui peut conduire au dépôt d'une couche de métal trop mince à la surface des pièces.

Par ailleurs, pour des raisons techniques ou esthétiques, il peut s'avérer nécessaire de métalliser seulement partiellement certaines pièces, notamment lorsque celles-ci comportent des éléments imprimés ne devant pas être métallisés. Pour ce faire, plusieurs méthodes sont actuellement utilisées. L'une d'entre elles, dite de "bi-injection", consiste à injecter deux ou plusieurs matériaux lors de la fabrication de la pièce, l'un des matériaux métallisant moins bien que le ou les autres. Une autre méthode repose sur l'utilisation d'une peinture épargne permettant de conserver les parties recouvertes à l'état brut.

A ce jour, la méthode la plus couramment utilisée pour empêcher la métallisation du support consiste à conditionner le support et la pièce à métalliser dans le bain de satinage. En effet, après un temps d'attaque plus ou moins long par le bain de satinage, le support généralement en PVC devient plus rugueux que la pièce à métalliser. Cette rugosité permet d'absorber dans le support du chrome hexavalent qui constitue un poison des bains de métallisation chimique. Ainsi, le chrome agit dans le bain de dépôt chimique comme agent de protection du support.

Cependant, les contraintes environnementales, de santé et les nouvelles réglementations restreignent de plus en plus l'utilisation du chrome hexavalent, qui est toxique pour l'homme et pour l'environnement, et poussent à la mise en place de procédés de métallisation alternatifs n'impliquant pas de chrome. Il a ainsi été proposé de substituer des solutions d'ions permanganate aux bains de satinage classiques. Dans ce contexte, il convient donc de mettre également au point d'autres techniques que "l'empoisonnement" au chrome hexavalent, permettant d'éviter la métallisation des supports.

La demande de brevet WO 2013/135662 décrit un procédé de métallisation de surfaces plastiques sans chrome, dans lequel les supports sont traités avec des ions iodates, de préférence à un stade avancé du procédé, pour éviter leur métallisation. On comprend que cette étape de traitement peut affecter l'adhérence ultérieure du métal sur les pièces qui, étant solidaires des supports, sont traitées simultanément, voire empêcher la métallisation des pièces. En outre, dans ce procédé, les pièces à métalliser sont également soumises à un pré-traitement à l'aide d'un dérivé de glycol, tel que l'acétate de 2-(2-éthoxyéthoxy)éthyle ou le butoxyéthanol. Outre qu'il augmente le coût du procédé et affecte son impact environnemental, ce pré-traitement est susceptible de favoriser également la métallisation du support. US 3 619 243 décrit un procédé pour éviter la métallisation d'un support d'au moins une pièce plastique comprenant la mise en contact du support en plastisol (à base de PVC) avec un inhibiteur de type formamide avant de déposer la pièce par exemple en ABS sur le support, d'oxyder la surface par un acide, d'activer et de finalement la mettre dans un bain électrochimique.

Il subsiste donc le besoin de disposer d'un procédé simple, peu coûteux et ne générant pas de composés organiques volatils, permettant de métalliser sélectivement des pièces en plastique non conducteur, c'est-à-dire d'empêcher la métallisation du support ou d'une partie de ces pièces, sans affecter la qualité ou la tenue mécanique du dépôt métallique.

### Résumé de l'invention

De façon surprenante, il est apparu à la Demanderesse que ce besoin pouvait être satisfait en utilisant certains composés spécifiques comme inhibiteurs de métallisation. En outre, ces composés peuvent être indifféremment utilisés dans des procédés de métallisation avec ou sans chrome, et dans des procédés utilisant ou non du palladium dans l'étape d'activation de la surface des pièces plastiques.

L'invention porte sur une méthode pour empêcher la métallisation d'un support d'au moins une pièce plastique soumise à un procédé de métallisation selon la revendication 1.

Elle se rapporte également à un procédé de métallisation sélective d'une pièce plastique associée à un support selon la revendication 6.

### Description détaillée de l'invention

### Définitions

Selon la présente invention, on entend par "pièces plastiques" des objets dont la surface est constituée d'un matériau plastique (polymère) non conducteur. Ces objets peuvent être entièrement constitués d'une ou plusieurs couche(s) de matériau polymère non conducteur ou ils peuvent être constitués de matériaux métalliques et/ou vitreux et/ou d'un matériau polymère conducteur revêtus d'une ou plusieurs couche(s) de matériau polymère non conducteur.

Par ailleurs, le terme "support" ou "cadre" désigne un système métallique qui est adapté pour permettre la réalisation d'au moins certaines étapes d'un procédé de métallisation d'une pièce ou, de préférence, simultanément pour un grand nombre de pièces.

Les pièces plastiques utilisées dans le procédé de métallisation selon la présente invention peuvent comprendre un matériau plastique non conducteur, choisi parmi les polymères thermoplastiques et les polymères thermodurcissables, d'origine naturelle ou synthétique, choisis parmi les résines époxy, l'ABS (copolymère acrylonitrile-butadiène-styrène) ; un polyamide ; le polycarbonate ; un polyester tel que le poly(méthacrylate de méthyle), le poly(téréphthalate d'éthylène) et le poly(téréphthalate de butylène) ; un polyéther imide ; le poly(fluorure de vinylidène) ; une polyétheréthercétone ; une polyoléfine telle que le polyéthylène ou le polypropylène ; le poly(oxyméthylène) ; le polystyrène ; le poly(sulfure de phénylène) ; et un mélange de tels polymères. En particulier, le matériau plastique non conducteur peut être de l'ABS, un polyamide, un polycarbonate ou un mélange de tels polymères. Plus particulièrement, il est constitué d'ABS ou d'un mélange ABS/polycarbonate. Selon une forme d'exécution de l'invention, ce matériau plastique peut comprendre, en plus du ou des polymères le constituant, une ou plusieurs charges organiques et/ou inorganiques destinées notamment à le renforcer, telles que de la silice, des fibres de carbone, des fibres de verre ou des fibres d'aramide (notamment de PPD-T). Ces pièces sont notamment utilisées dans le domaine automobile ou encore comme constituants de conditionnements de produits cosmétiques ou d'éléments sanitaires.

De son côté, le support est constitué ou recouvert d'un matériau plastique distinct de celui formant la surface des pièces, généralement constitué d'au moins un polymère mélangé à un ou plusieurs plastifiants, en particulier de poly(chlorure de vinyle) ou PVC.

Dans un mode de réalisation, les pièces plastiques comprennent des zones qu'on souhaite ne pas métalliser. Dans ce cas, la solution aqueuse inhibitrice utilisée selon l'invention peut être mise en contact avec les pièces après masquage des parties à préserver. Dans cette forme d'exécution, on préfère utiliser un masque en PVC ou en un autre matériau présentant plus d'affinité avec la solution aqueuse inhibitrice que le matériau plastique constituant les pièces. En variante, la surface des pièces peut comprendre au moins deux zones constituées de matériaux différents, obtenus par exemple par multi-injection. La différence d'affinité de ces matériaux pour la solution aqueuse inhibitrice entraîne alors une métallisation sélective de certaines parties des pièces. On peut ainsi métalliser sélectivement des pièces présentant une portion de surface constituée d'un matériau plastique comprenant de l'ABS ou un mélange ABS / polycarbonate et une autre portion de surface comprenant du polycarbonate. Le procédé de multi-injection permet d'obtenir des pièces présentant une zone transparente ou translucide et une zone opaque, ou d'obtenir une pièce bicomposant qui est économiquement plus avantageuse que deux composants assemblés mécaniquement. Dans un autre mode de réalisation, la solution aqueuse inhibitrice est utilisée selon l'invention pour empêcher la métallisation du support des pièces plastiques. Dans ce cas, elle est mise en contact avec l'ensemble du support, soit avant qu'il ne soit fixé aux pièces, soit une fois fixé aux pièces. Il a en effet été observé que la solution aqueuse inhibitrice utilisée selon l'invention présentait une plus grande affinité pour le PVC constituant le support que pour les matériaux polymères formant la surface des pièces à métalliser, de sorte qu'il n'est pas utile de traiter le support séparément. Il est bien entendu que ces deux modes de réalisation peuvent être combinés. En pratique, on préfère que l'ensemble constitué des pièces et de leur support soit immergé dans la solution aqueuse inhibitrice selon l'invention. Il en résulte une absence de métallisation du support ainsi qu'éventuellement des parties de pièce à préserver.

Selon un mode de réalisation préféré, le procédé de métallisation selon l'invention comprend l'ensemble des étapes successives suivantes :
1. a) Fixation des pièces à métalliser sur le support ;
2. b) Nettoyage, notamment dégraissage, des pièces ;
3. c) Oxydation de la surface desdites pièces ;
4. d) Activation de la surface desdites pièces ;
5. e) Eventuellement, dépôt chimique de métal sur ladite surface ;
6. f) Dépôt électrolytique de métal.

Dans ce cas, l'étape consistant à mettre la solution aqueuse inhibitrice en contact avec la pièce et/ou avec le support est mise en oeuvre avant l'étape (c), éventuellement avant l'étape (b), voire avant l'étape (a). On préfère que cette étape soit mise en oeuvre entre les étapes (b) et (c) précitées. En variante, elle peut être mise en oeuvre au cours des étapes (a) et/ou (b).

L'étape (b) est une étape de nettoyage ou de dégraissage bien connue de l'homme de l'art ; elle peut notamment être mise en oeuvre au moyen d'un bain légèrement alcalin.

L'étape (c) ci-dessus consiste en un traitement oxydant, à l'aide d'une solution oxydante à base notamment d'acide nitrique, chlorhydrique ou sulfurique, d'un permanganate, d'un chlorate, d'un nitrate, d'un peroxyde, du réactif de Fenton, de chrome hexavalent et/ou d'ozone. On préfère ne pas utiliser de chrome hexavalent dans cette étape. Plus préférentiellement, la solution oxydante est une solution de permanganate de sodium ou de potassium (avantageusement de sodium) qui permet de conférer à la surface du support et des pièces une rugosité fine, généralement inférieure à 0,1 µm, et de créer simultanément des fonctions oxygénées sur la surface des pièces, avantageusement des fonctions chélatantes de type acide carboxylique. En outre, on préfère que la solution oxydante présente un pH acide, par exemple inférieur à 2 voire inférieur à 1. Cette étape peut être mise en oeuvre par trempage du support fixé aux pièces dans un bain de solution oxydante pendant une durée allant par exemple de 1 à 60 minutes, avantageusement de 5 à 30 minutes. La température du bain peut être comprise entre 20 et 40°C.

Dans l'étape (d), des particules de métal catalytique sont créées à la surface des pièces précédemment oxydée. Celles-ci peuvent être choisies parmi des particules de cuivre, d'argent, d'or, de nickel, de platine, de palladium, d'iridium, de rhodium ou de cobalt. Selon une forme d'exécution préférée de l'invention, ces particules peuvent être créées à la surface des pièces à métalliser en appliquant sur cette dernière une solution contenant l'un des métaux précités, de préférence du cuivre ou du nickel, sous forme de sel avec un ion tétrafluoroborate, sulfate, bromure, fluorure, iodure, nitrate, phosphate ou chlorure, par exemple, de préférence avec un ion sulfate ou chlorure. Cette solution a de préférence un pH supérieur à 7 et avantageusement compris entre 9 et 11, préférentiellement entre 10 et 11. On préfère que ce pH soit atteint par ajout d'ammoniaque à la solution métallique, plutôt que d'hydroxyde de sodium. En outre, selon une forme d'exécution préférée de l'invention, la solution métallique ne contient pas de complexant organique. Les pièces à métalliser peuvent être trempées dans la solution métallique pendant une durée d'une minute à une heure, par exemple de 10 à 20 minutes. A l'issue de cette étape, les groupements organiques présents à la surface des pièces par suite du traitement oxydant sont liés par chélation ou complexation aux ions métalliques appliqués pendant l'étape (d).

Dans une autre forme d'exécution de l'invention, la surface des pièces à métalliser peut être recouverte d'une solution de colloïde métallique dans l'étape (d). On utilise avantageusement un colloïde Pd/Sn classiquement obtenu par réduction de chlorure de palladium à l'aide de chlorure d'étain (II) en présence d'un acide fort tel que l'acide chlorhydrique. Dans ce cas, l'étape (d) se décompose généralement en une sous-étape d'activation, décrite précédemment, suivie d'une sous-étape d'accélération, qui consiste à immerger la pièce à métalliser, précédemment activée, dans un bain, notamment d'acide sulfurique, permettant d'oxyder les ions Sn II en ions Sn IV et de libérer les particules de palladium adsorbées.

A l'issue de l'étape (d), la surface des pièces à métalliser est recouverte de germes d'un métal catalytique et peut donc être soumise éventuellement à l'étape (e) de dépôt chimique ou sinon directement à l'étape (f) de dépôt électrochimique. Dans l'étape (e), les pièces sont généralement immergées préalablement dans une solution réductrice basique contenant au moins un agent réducteur tel que le borohydrure de sodium, l'hydrazine, l'hypophosphite de sodium ou le diméthylaminoborane. Cette solution peut soit contenir en outre un sel du métal à déposer sur les pièces, soit être suivie d'une étape d'application d'une solution renfermant ce sel. Il s'agit généralement d'un sulfate d'un cation métallique choisi parmi les ions argent, or, cobalt, cuivre, fer, nickel, palladium et platine, les ions nickel et cuivre étant préférés dans cette invention. Les solutions utilisées dans l'étape (e) peuvent en outre comprendre un agent complexant et/ou un agent régulateur de pH. On préfère que l'étape de réduction soit mise en oeuvre à pH très basique, généralement compris entre 11 et 13, et à une température comprise entre 30 et 50°C.

A l'issue de l'étape (e), on obtient une pièce métallisée dont la couche métallique superficielle peut être épaissie par électrolyse, conformément à l'étape (f), suivant des procédés bien connus de l'homme de l'art. En variante, l'étape (f) peut être mise en oeuvre directement après l'étape (d).

Toutes les solutions employées dans le procédé décrit ci-dessus sont des solutions aqueuses. En outre, les étapes (b), (c), (d) et (e) sont réalisées par trempage des pièces et du support dans des bains comprenant les réactifs adaptés pour réaliser chaque étape, bien qu'on puisse en variante appliquer les solutions décrites ci-dessus par pulvérisation.

Le procédé décrit ci-dessus peut en outre comprendre d'autres étapes intermédiaires, telles que des étapes de rinçage des pièces, notamment à l'eau éventuellement additionnée de détergent et/ou d'une base, ou une étape de traitement à l'aide d'un agent réducteur, notamment entre les étapes (c) et (d), en particulier lorsque le traitement oxydant met en oeuvre du chrome hexavalent ou un permanganate de métal alcalin.

Comme indiqué précédemment, une solution aqueuse inhibitrice est appliquée au support et éventuellement aux pièces en amont de l'étape (c). Cette solution comprend au moins un inhibiteur de métallisation choisi parmi des composés à base de soufre et précisément parmi le sulfite de sodium, la thiourée, les thiols,les thioéthers, les composés portant au moins groupe thiol et/ou thiazolyle et leurs mélanges. Parmi cette liste, on préfère les composés soufrés organiques et plus particulièrement les thiols, les thoéthers et les composés portant au moins groupe thiol et/ou thiazolyle. L'inhibiteur de métallisation peut être éventuellement associé à au moins un inhibiteur complémentaire choisi parmi : l'acide oxalique, un sel de plomb, un sel de cadmium, un sel d'étain, un sel d'aluminium, l'urée, le nitrate de thallium, le 4-nitrobenzènediazonium tétrafluoroborate et l'acide 4-aminobenzoïque. Les inhibiteurs complémentaires sous forme de sels peuvent être constitués de sels organiques ou inorganiques, notamment de sulfate, nitrate, oxalate ou acétate, sans que cette liste ne soit limitative. Parmi les inhibiteurs de métallisation précités, on préfère utiliser les thiols et les thioéthers, en particulier les thioéthers hétérocycliques aromatiques tels que le mercaptobenzothiazole. La solution aqueuse inhibitrice renferme avantageusement une concentration d'inhibiteur représentant de 0,01g/L (0,0001% m) à 10 g/L (0,1% m), par exemple de 0,01g/L (0,0001% m) à 10 g/L (0,1% m), en poids par rapport au volume total de la composition.

La solution comprenant l'inhibiteur de métallisation selon l'invention a un pH compris entre 0,5 et 6 et de préférence entre 1 et 3. Ladite solution comprend donc de préférence un composé régulant le pH à cette valeur, qui est avantageusement choisi parmi l'acide phosphorique, l'acide chlorhydrique et l'acide sulfurique.

Dans un mode de réalisation, la solution aqueuse inhibitrice comprend en outre au moins un agent viscosifiant qui peut notamment être choisi parmi les hydrocolloïdes tels que les dérivés de cellulose, notamment la carboxyméthylcellulose ou l'hydroxypropyl méthylcellulose ; la gélatine ; les extraits d'algues tels que l'agar agar, les alginates et les carraghénanes ; les polymères synthétiques tels que le poly(alcool vinylique), les polyesters d'acide acrylique et méthacrylique, dont le polyméthacrylate d'hydroxyéthyle, et les sels de poly(acide acrylique) et de poly(acide méthacrylique) ; l'amidon et ses dérivés ; les galactomannanes tels que la gomme de guar ; et leurs mélanges, sans que cette liste ne soit limitative.

L'invention sera mieux comprise à la lumière des exemples suivants, qui sont donnés à des fins d'illustration seulement et n'ont pas pour but de limiter la portée de cette invention.

### Exemples

### Exemple 1 : Procédé de métallisation utilisant du chrome (activation sans palladium)

On prépare un échantillon à métalliser en fixant une pièce témoin en ABS sur un support classique en PVC. Après dégraissage, l'échantillon (support + pièce) est placé pendant 20 minutes dans un bain contenant 40g/L de mercaptobenzothiazole, 100mL/L d'acide sulfurique (95%) et 25g/L de carboxyméthylcellulose. Le bain est thermorégulé à 40°C. L'échantillon est ensuite trempé dans un bain de satinage porté à 65°C, pendant 10 min, le bain comprenant 400g/L d'acide sulfurique et 400 g/L d'acide chromique, puis dans une solution d'hydrazine à 10g/L. Il est ensuite immergé dans un bain de catalyse maintenu à 30°C, renfermant un colloïde de Pd/Sn en quantité suffisante pour obtenir une concentration en palladium de 30 ppm dans le bain, puis dans un bain d'accélération à 50°C, à base d'acide sulfurique. On procède ensuite au dépôt chimique de nickel dans une solution aqueuse renfermant 10g/L de sulfate de nickel, 10g/L d'hypophosphite de sodium, 50g/L d'ammoniaque à 33%, jusqu'à obtenir un dépôt de 0,3µm sur la surface de la pièce.

On n'observe pas de métallisation du support.

### Exemple 2 : Procédé de métallisation sans chrome (activation sans palladium)

On fixe sur un support en PVC plastifié une pièce en ABS ainsi qu'une pièce bi-matière présentant à la fois des zones ABS/PC et des zones PC. Après dégraissage, l'ensemble est trempé dans une solution contenant 8 g/L de mercaptobenzothiazole, 100 mL/L d'acide phosphorique (85%) et 25 g/L de carboxyméthylcellulose pendant 15 minutes. Le bain est régulé à 40°C. Après rinçage, l'ensemble est plongé pendant 10 minutes dans un bain de satinage comprenant du permanganate de sodium et de l'acide phosphorique. Après rinçage, l'ensemble est trempé pendant 5 minutes dans un bain d'activation comprenant du sulfate de cuivre pentahydraté et de l'ammoniaque puis, après nouveau rinçage, dans une solution réductrice contenant du borohydrure de sodium et de l'hydroxyde de sodium. Pour finir, l'ensemble est plongé dans un bain de cuivrage chimique, comprenant du cuivre, de l'EDTA, de l'hydroxyde de sodium et du formaldéhyde (Circuposit 3350-1 de ROHM & HAAS).

A l'issue de ce procédé, on n'observe pas de trace de métallisation sur le support, ni sur la zone en polycarbonate des pièces bi-injectées, alors que la pièce de référence en ABS et les zones en ABS/PC des pièces bi-matière sont complètement métallisées.

### Exemple 3 : Procédé de métallisation sans chrome (activation avec palladium)

On fixe sur un support en PVC plastifié une pièce en ABS ainsi qu'une pièce bi-matière présentant à la fois des zones ABS/PC et des zones PC. Après dégraissage, l'ensemble est trempé dans une solution contenant 12 g/L de (2-chloro-1,3-thiazol-5-yl)méthanol, 100 mL/L d'acide phosphorique (85%) et 25 g/L de carboxyméthylcellulose pendant 15 minutes. Le bain est régulé à 40°C. Après rinçage, l'ensemble est plongé pendant 10 minutes dans un bain de satinage comprenant du permanganate de sodium et de l'acide phosphorique. Après rinçage, l'ensemble est trempé pendant 3 minutes dans un bain d'activation au palladium comprenant 250 mL/L d'acide chlorhydrique et 38 mL/L de mélange de palladium et de chlorure d'étain (Catalyst 9F de ROHM & HAAS). Après nouveau rinçage, l'ensemble est immergé dans un bain dit d'accélération, à base d'acide sulfurique.

A l'issue de ce procédé, on n'observe pas de trace de métallisation sur le support, ni sur la zone en polycarbonate des pièces bi-injectées, alors que la pièce de référence en ABS et les zones en ABS/PC des pièces bi-matière sont complètement métallisées.

### Exemple 4 (comparatif) : Procédé de métallisation sans chrome (activation sans palladium)

On fixe sur un support en PVC plastifié une pièce en ABS ainsi qu'une pièce bi-matière présentant à la fois des zones ABS/PC et des zones PC. Après dégraissage, l'ensemble est plongé pendant 10 minutes dans un bain de satinage comprenant du permanganate de sodium et de l'acide phosphorique. Après rinçage, l'ensemble est trempé pendant 5 minutes dans un bain d'activation comprenant du sulfate de cuivre pentahydraté et de l'ammoniaque puis, après nouveau rinçage, dans une solution réductrice contenant du borohydrure de sodium et de l'hydroxyde de sodium. Pour finir, l'ensemble est plongé dans un bain de cuivrage chimique, comprenant du cuivre, de l'EDTA, de l'hydroxyde de sodium et du formaldéhyde (Circuposit 3350-1 de ROHM & HAAS).

A l'issue de ce procédé, on constate qu'une partie du support est métallisée et on observe également des traces de métallisation sur les zones en polycarbonate des pièces bi-matière.

Les pièces de référence et les zones en ABS/PC des pièces bi-matière sont complètement métallisées.

### Exemple 5 (comparatif) : Procédé de métallisation sans chrome (activation avec palladium)

On fixe sur un support en PVC plastifié une pièce en ABS ainsi qu'une pièce bi-matière présentant à la fois des zones ABS/PC et des zones PC. Après dégraissage, l'ensemble est plongé pendant 10 minutes dans un bain de satinage comprenant du permanganate de sodium et de l'acide phosphorique. Après rinçage, l'ensemble est trempé pendant 3 minutes dans un bain d'activation au palladium comprenant 250 mL/L d'acide chlorhydrique et 38 mL/L de mélange de palladium et de chlorure d'étain (Catalyst 9F de ROHM & HAAS). Après nouveau rinçage, l'ensemble est immergé dans un bain dit d'accélération, à base d'acide sulfurique.

A l'issue de ce procédé, on constate que l'ensemble du support et des pièces est complètement métallisé, y compris les zones en polycarbonate des pièces bi-matière, qui ne sont pas censées métalliser.

### Exemple 6 : Etude de différents inhibiteurs de métallisation

On a reproduit le protocole décrit à l'Exemple 2 en modifiant la nature de l'inhibiteur de métallisation. Le tableau ci-dessous rassemble les résultats obtenus pour les différents inhibiteurs testés.

| Exemple | Inhibiteur | Concentration (g/L) | Métallisation pièce | | Absence de métallisation sur support |
|---|---|---|---|---|---|
| | | | ABS/PC | PC | |
| Ex 6A | Acide thiazol-2-yl-acétique | 5 | Oui | Non | OK |
| Ex 6B | 2-mercapto benzothiazole | 4 | Oui | Non | OK |
| Ex 6C | 5-chloro-2-mercaptobenzothiazole | 6 | Oui | Non | OK |
| Ex 6D | 2-mercapto-3-butanol | 11 | Oui | Non | OK |
| Ex 6E | Chlorhydratede2-thiazol-2-yl-éthylamine | 8 | Oui | Non | OK |
| Ex 6F | 4-phénylthiazol-2-thiol | 23 | Oui | Non | OK |

Comme il ressort du tableau ci-dessus, les inhibiteurs de métallisation selon l'invention permettent tous de métalliser sélectivement les pièces et parties de pièces à métalliser et de préserver le support et les parties de pièces à préserver éventuellement.

## Revendications

1. Méthode pour empêcher la métallisation d'un support d'au moins une pièce plastique soumise à un procédé de métallisation, dans laquelle le support est constitué ou recouvert d'un matériau plastique distinct de celui formant la surface des pièces et constitué de poly(chlorure de vinyle) mélangé à un ou plusieurs plastifiants, ladite méthode comprenant les étapes successives :
- d'oxydation de la surface de ladite pièce,
- d'activation de la surface oxydée par création de particules de métal catalytique à la surface des pièces, et
- de dépôt chimique et/ou électrochimique de métal sur la surface activée,
**caractérisé en ce qu'**il comprend une étape de mise en contact dudit support, avant ladite étape d'oxydation, avec une solution aqueuse inhibitrice comprenant au moins un inhibiteur de métallisation choisi parmi le sulfite de sodium, la thiourée, les thiols, les thioéthers, les composés portant au moins groupe thiol et/ou thiazolyle et leurs mélanges et la solution inhibitrice a un pH compris entre 0,5 et 6 et de préférence entre 1 et 3.

2. Méthode selon la revendication 1, **caractérisée en ce que** la solution inhibitrice comprend en outre un régulateur de pH.

3. Méthode selon la revendication 2, **caractérisée en ce que** le régulateur de pH est choisi parmi l'acide sulfurique, l'acide chlorhydrique et l'acide phosphorique.

4. Méthode selon l'une quelconque des revendications 1 à 3, **caractérisée en ce que** la solution inhibitrice comprend en outre un viscosifiant.

5. Méthode selon la revendication 4, **caractérisée en ce que** le viscosifiant est choisi parmi les dérivés de cellulose ; la gélatine ; les extraits d'algues ; les polymères synthétiques ; l'amidon et ses dérivés ; les galactomannanes ; et leurs mélanges.

6. Procédé de métallisation sélective d'une pièce plastique associée à un support, comprenant les étapes successives :
- d'oxydation de la surface de ladite pièce sans utiliser de chrome hexavalent,
- d'activation de la surface oxydée par création de particules de métal catalytique à la surface des pièces, et
- de dépôt chimique et/ou électrochimique de métal sur la surface activée,
ledit procédé comprenant une étape de mise en contact de ladite pièce, avant ladite étape d'oxydation, avec une solution aqueuse inhibitrice comprenant au moins un inhibiteur de métallisation choisi parmi le sulfite de sodium, la thiourée, les thiols, les thioéthers, les composés portant au moins groupe thiol et/ou thiazolyle et leurs mélanges et la solution inhibitrice a un pH compris entre 0,5 et 6 et de préférence entre 1 et 3, dans lequel soit la solution aqueuse inhibitrice est mise en contact avec les pièces après masquage des parties à préserver à l'aide d'un matériau présentant plus d'affinité avec la solution aqueuse inhibitrice que le matériau plastique constituant les pièces, soit la surface des pièces comprend au moins deux zones constituées de matériaux différents, obtenues par exemple par multi-injection.

## Patentansprüche

1. Verfahren zur Verhinderung der Metallisierung eines Trägers mindestens eines Kunststoffteils, das einem Metallisierungsverfahren unterzogen wird, bei dem der Träger von einem Kunststoff gebildet oder überzogen ist, der sich von jenem unterscheidet, der die Oberfläche der Teile bildet, und von Polyvinylchlorid, gemischt mit einem oder mehreren Weichmachern, gebildet ist, wobei das Verfahren die folgenden Schritte nacheinander umfasst:
- Oxidation der Oberfläche des Teils,
- Aktivierung der oxidierten Oberfläche durch Erzeugung von Partikeln eines katalytischen Metalls an der Oberfläche der Teile, und
- chemisches und/oder elektrochemisches Aufbringen von Metall auf die aktivierte Oberfläche,
**dadurch gekennzeichnet, dass** es vor dem Oxidationsschritt einen Schritt der Herstellung eines Kontakts des Trägers mit einer wässrigen Hemmlösung umfasst, die mindestens einen Metallisierungshemmstoff umfasst, der ausgewählt ist unter Natriumsulfit, Thioharnstoff, Thiolen, Thioethern, Verbindungen, die mindestens Thiol- und/oder Thiazolyl-Gruppe tragen, und ihren Mischungen, und die Hemmlösung einen pH-Wert zwischen 0,5 und 6 und vorzugsweise zwischen 1 und 3 hat.

2. Verfahren nach Anspruch 1, **dadurch gekennzeichnet, dass** die Hemmlösung ferner einen pH-Regulator umfasst.

3. Verfahren nach Anspruch 2, **dadurch gekennzeichnet, dass** der pH-Regulator unter Schwefelsäure, Salzsäure und Phosphorsäure ausgewählt ist.

4. Verfahren nach einem der Ansprüche 1 bis 3, **dadurch gekennzeichnet, dass** die Hemmlösung ferner ein viskosifizierendes Mittel umfasst.

5. Verfahren nach Anspruch 4, **dadurch gekennzeichnet, dass** das viskosifizierende Mittel ausgewählt ist unter den Zellulosederivaten; Gelatine; Algenextrakten, synthetischen Polymeren; Stärke und ihren Derivaten; Galaktomannanen; und ihren Mischungen.

6. Verfahren zur selektiven Metallisierung eines einem Träger zugeordneten Kunststoffteils, umfassend nacheinander die folgenden Schritte:
- Oxidation der Oberfläche des Teils ohne Verwendung von hexavalentem Chrom,
- Aktivierung der oxidierten Oberfläche durch Erzeugung von Partikeln eines katalytischen Metalls an der Oberfläche der Teile, und
- chemisches und/oder elektrochemisches Aufbringen von Metall auf die aktivierte Oberfläche,
wobei das Verfahren vor dem Oxidationsschritt einen Schritt der Herstellung eines Kontakts des Teils mit einer wässrigen Hemmlösung umfasst, die mindestens einen Metallisierungshemmstoff umfasst, der ausgewählt ist unter Natriumsulfit, Thioharnstoff, Thiolen, Thioethern, Verbindungen, die mindestens Thiol- und/oder Thiazolyl-Gruppe tragen, und ihren Mischungen, und die Hemmlösung einen pH-Wert zwischen 0,5 und 6 und vorzugsweise zwischen 1 und 3 hat, wobei entweder die wässrige Hemmlösung mit den Teilen nach Verdecken der zu schützenden Teile mit Hilfe eines Materials, das eine größere Affinität mit der wässrigen Hemmlösung als der die Teile bildende Kunststoff aufweist, in Kontakt gebracht wird, oder die Oberfläche der Teile mindestens zwei Zonen umfasst, die von unterschiedlichen Materialien gebildet sind, die beispielsweise durch Multiinjektion erhalten werden.

## Claims

1. Method for preventing the metallization of a support of at least one plastic part subjected to a metallization process, in which the support is formed of or covered with a plastic distinct from that forming the surface of the parts and formed of poly(vinyl chloride) mixed with one or more plasticizers, said method comprising the successive stages:
- of oxidation of the surface of said part,
- of activation of the oxidized surface by creation of particles of catalytic metal at the surface of the parts, and
- of chemical and/or electrochemical deposition of metal on the activated surface,
**characterized in that** it comprises a stage in which said support, before said oxidation stage, is brought into contact with an aqueous inhibiting solution comprising at least one metallization inhibitor chosen from sodium sulfite, thiourea, thiols, thioethers, compounds carrying at least thiol and/or thiazolyl group and their mixtures and the inhibiting solution has a pH of between 0.5 and 6 and preferably between 1 and 3.

2. Method according to Claim 1, **characterized in that** the inhibiting solution additionally comprises a pH regulator.

3. Method according to Claim 2, **characterized in that** the pH regulator is chosen from sulfuric acid, hydrochloric acid and phosphoric acid.

4. Method according to any one of Claims 1 to 3, **characterized in that** the inhibiting solution additionally comprises a viscosifying agent.

5. Method according to Claim 4, **characterized in that** the viscosifying agent is chosen from cellulose derivatives; gelatin; algal extracts; synthetic polymers; starch and its derivatives; galactomannans; and their mixtures.

6. Process for the selective metallization of a plastic part combined with a support, comprising the successive stages:
- of oxidation of the surface of said part without using hexavalent chromium,
- of activation of the oxidized surface by creation of particles of catalytic metal at the surface of the parts, and
- of chemical and/or electrochemical deposition of metal on the activated surface,
said process comprising a stage in which said part, before said oxidation stage, is brought into contact with an aqueous inhibiting solution comprising at least one metallization inhibitor chosen from sodium sulfite, thiourea, thiols, thioethers, compounds carrying at least thiol and/or thiazolyl group and their mixtures and the inhibiting solution has a pH of between 0.5 and 6 and preferably between 1 and 3, in which either the aqueous inhibiting solution is brought into contact with the parts after masking the portions to be preserved using a material exhibiting a greater affinity for the aqueous inhibiting solution than the plastic forming the parts or the surface of the parts comprises at least two regions formed of different materials, which regions are obtained, for example, by multiple-injection molding.
